Europäisches Patentamt

European Patent Office

Office européen des brevets

(19)

(11) EP 0 848 349 A1

(12) # DEMANDE DE BREVET EUROPEEN

(43) Date de publication:
17.06.1998 Bulletin 1998/25

(51) Int Cl.6: G06T 7/20

(21) Numéro de dépôt: 97410141.2

(22) Date de dépôt: 12.12.1997

(84) Etats contractants désignés:
AT BE CH DE DK ES FI FR GB GR IE IT LI LU MC NL PT SE
Etats d'extension désignés:
AL LT LV MK RO SI

(30) Priorité: 13.12.1996 FR 9615604

(71) Demandeur: SGS-THOMSON MICROELECTRONICS S.A.
94250 Gentilly (FR)

(72) Inventeurs:
• Herluison, Jean-Claude
38660 Lumbin (FR)
• Uguzzoni, Alessandro
40137 Bologna (IT)

(74) Mandataire: de Beaumont, Michel
1, rue Champollion
38000 Grenoble (FR)

(54) **Procédé et dispositif d'estimation de mouvement de portions d'images mobiles**

(57)     L'invention concerne un procédé et un dispositif d'estimation de mouvement d'un macrobloc (CW) d'une image courante dans une fenêtre de référence (SW) contenant le macrobloc et son environnement dans l'image précédente, consistant à déterminer un vecteur de mouvement du macrobloc courant par rapport à la fenêtre de référence comme étant le vecteur de déplacement pour lequel le macrobloc courant présente une distorsion minimale par rapport à un macrobloc de la fenêtre de référence, la distorsion du macrobloc courant (CW) par rapport aux macroblocs dans la fenêtre de référence (SW) étant examinée avec une amplitude croissante de vecteurs de mouvement depuis un vecteur nul.

Fig 1

EP 0 848 349 A1

## Description

La présente invention se rapporte à un circuit de compression d'images mobiles, telles que des images de télévision. Elle concerne, plus particulièrement, l'estimation de mouvement de portions d'images, une portion d'une image courante étant comparée à son environnement dans l'image précédente.

Un circuit de ce type est utilisé pour coder les images afin qu'elles puissent être transmises, dans le cadre d'une transmission d'images vidéo, en minimisant le nombre d'informations à transmettre. On retrouve un tel circuit, par exemple, dans un vidéophone. La compression que réalise le circuit consiste, entre autres, à effectuer une estimation de mouvement entre des portions de deux images successives. Cette estimation de mouvement permet de coder, et donc de transmettre, pour des portions d'une image courante, seulement des vecteurs de mouvement et des informations de distorsion associés à ces portions.

Les images, par exemple issues d'une caméra vidéo, sont découpées en portions d'image, appelées "macroblocs". Ces macroblocs correspondent généralement à un découpage de l'image en carrés, chaque carré ayant une dimension de 16X16 pixels. Une image est stockée séquentiellement, ligne par ligne, dans une mémoire vidéo, et les pixels ainsi mémorisés sont extraits de cette mémoire vidéo par ensembles de pixels correspondant à des portions carrées de l'image. Ces ensembles de pixels, ou macroblocs, sont rangés dans une mémoire cache, pour être utilisés par un processeur de calcul chargé, entre autres, de déterminer le vecteur de mouvement du macrobloc considéré.

Pour réaliser l'estimation de mouvement d'un macrobloc, le processeur de calcul dispose, non seulement des pixels du macrobloc considéré de l'image courante, mais également de pixels entourant le macrobloc correspondant dans l'image précédente. Le processeur de calculs traite, séquentiellement, chaque macrobloc de l'image courante, en utilisant, au moins partiellement, les pixels de macroblocs voisins dans l'image précédente qui constituent un ensemble de valeurs de référence, appelé "fenêtre de référence". En pratique, une première mémoire cache contient le macrobloc courant et une seconde mémoire cache contient une fenêtre de référence plus grande. Cette fenêtre de référence comprend, outre les pixels du macrobloc considéré dans l'image précédente, au moins une partie des pixels des macroblocs de l'image précédente qui lui sont séquentiellement voisins dans toutes les directions.

L'estimation de mouvement d'un macrobloc consiste à déterminer le vecteur de mouvement de ce macrobloc par rapport à un macrobloc de l'image précédente et la distorsion entre ces deux macroblocs, c'est-à-dire la différence cumulée entre les pixels des deux macroblocs. On détermine le vecteur de mouvement en recherchant, dans la fenêtre de référence, le macrobloc qui présente une distorsion minimale. La recherche de la distorsion minimale vise à réduire le nombre de bits à transmettre pour chaque macrobloc. En effet, le codage auquel est soumise la distorsion pour la transmission des images est un codage à longueur variable faisant appel à une transformée cosinus de la différence entre le macrobloc dans la fenêtre de référence et le macrobloc courant.

Le processeur de calcul comporte un module de calcul de distorsion comprenant, par exemple, seize opérateurs organisés en architecture systolique. Un tel module permet de calculer, en parallèle, les distorsions correspondant à seize valeurs différentes d'une des composantes du vecteur de mouvement, par exemple, les seize valeurs de la composante verticale. Les valeurs de l'autre composante (par exemple, horizontale) sont explorées successivement.

Les données nécessaires aux calculs sont recherchées dans les mémoires caches à partir de compteurs de déplacement horizontal dans la fenêtre de référence, et horizontal et vertical dans le macrobloc courant. Le déplacement vertical dans la fenêtre de référence se déduit du déplacement vertical dans le macrobloc courant.

Un opérateur de recherche du minimum permet de comparer les seize valeurs trouvées, pour une position horizontale, à une valeur minimale trouvée lors de l'examen d'un vecteur vertical de résultats précédent. Si une des valeurs est inférieure à cette valeur minimale, la valeur courante devient la valeur minimale de référence. Une fois que la fenêtre de référence a été entièrement explorée, on dispose alors du vecteur de mouvement associé à une distorsion minimale entre le macrobloc courant et un macrobloc appartenant à la fenêtre de référence.

Un tel double balayage linéaire, vertical et horizontal, conduit à calculer des valeurs successives de distorsion correspondant à des valeurs de vecteur de mouvement $V[x, y]$ explorées dans l'ordre suivant :

$$y = -ymax, ..., y = 0, ..., y = +ymax ;$$

pour successivement :

$$x = -xmax, ..., x = 0, ..., x = +xmax,$$

où $x$ et $y$ désignent respectivement les composantes horizontales et verticales.

Il serait souhaitable de pouvoir sélectionner, comme vecteur de mouvement à transmettre pour chaque macrobloc, le vecteur le plus court. En effet, si deux vecteurs de mouvement présentent une même distorsion, on aurait intérêt à transmettre le vecteur le plus court, c'est-à-dire le vecteur caractérisant un déplacement minimal du macrobloc considéré, afin de minimiser le nombre de bits caractéristiques de ce vecteur à transmettre par codage à longueur variable.

Toutefois, à la différence de la détermination de la distorsion minimale, il serait particulièrement complexe d'utiliser un mécanisme à seuil pour choisir entre deux vecteurs de mouvement présentant une même distorsion. En effet, en raison de l'organisation des opérateurs en architecture systolique, une telle sélection devrait être effectuée après avoir exploré toute la fenêtre de référence et il faudrait donc mémoriser l'ensemble des vecteurs de mouvement et les distorsions associées.

La présente invention vise à proposer un circuit de compression d'images mobiles permettant de sélectionner, lors de l'estimation du mouvement d'un macrobloc, le vecteur de déplacement le plus court.

La présente invention vise également à respecter l'organisation en architecture systolique des opérateurs du circuit de compression d'images mobiles.

Pour atteindre ces objets, la présente invention prévoit un procédé d'estimation de mouvement consistant à déterminer un vecteur de mouvement, d'un macrobloc d'une image courante par rapport à une fenêtre de référence contenant le macrobloc et son environnement dans l'image précédente, comme étant le vecteur pour lequel le macrobloc courant présente une distorsion minimale par rapport à un macrobloc de la fenêtre de référence, et à examiner la distorsion du macrobloc courant par rapport aux macroblocs dans la fenêtre de référence avec une amplitude croissante de vecteurs de mouvement depuis un vecteur nul.

Selon un mode de réalisation de la présente invention, ce procédé consiste à adresser en lecture une première mémoire cache, contenant la fenêtre de référence, dans un ordre d'amplitudes croissantes du déplacement du macrobloc courant dans une première direction.

Selon un mode de réalisation de la présente invention, ce procédé consiste à exploiter, dans un ordre d'amplitudes croissantes du déplacement du macrobloc courant dans une deuxième direction, les distorsions calculées pour une position du macrobloc courant dans la première direction.

Selon un mode de réalisation de la présente invention, chaque distorsion calculée est comparée à une valeur minimale des distorsions calculées précédemment pour le macrobloc courant.

La présente invention prévoit aussi un dispositif d'estimation de mouvement d'un macrobloc d'une image courante dans une fenêtre de référence contenant le macrobloc courant et son environnement dans une image précédente, comportant une première mémoire cache destinée à contenir la fenêtre de référence ; une deuxième mémoire cache destinée à contenir le macrobloc courant ; et un module d'opérateurs, organisés en architecture systolique et alimentés par une lecture des mémoires caches, destiné à calculer, pour chaque position du macrobloc courant dans une première direction de la fenêtre de référence, la distorsion entre le macrobloc courant et plusieurs macroblocs de la fenêtre de référence dans une deuxième direction de la fenêtre de référence ; un moyen de transcodage de l'adresse de lecture de la première mémoire cache pour adresser cette dernière dans un ordre d'amplitudes croissantes des déplacements du macrobloc courant dans la première direction ; et un moyen de sélection, dans un ordre d'amplitudes croissantes des déplacements du macrobloc courant dans une deuxième direction, d'un vecteur de mouvement associé à une distorsion minimale à partir des valeurs délivrées par le module d'opérateurs.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :

la figure 1 représente, sous forme de blocs, un mode de réalisation d'un dispositif d'estimation de mouvement selon la présente invention ;
la figure 2 représente un détail du circuit de la figure 1 ; et
la figure 3 est un organigramme illustrant le fonctionnement d'un dispositif d'estimation de mouvement selon la présente invention.

Les mêmes éléments ont été désignés aux différentes figures par les mêmes références. Pour des raisons de clarté, seuls les éléments qui sont nécessaires à la compréhension de l'invention ont été représentés aux figures.

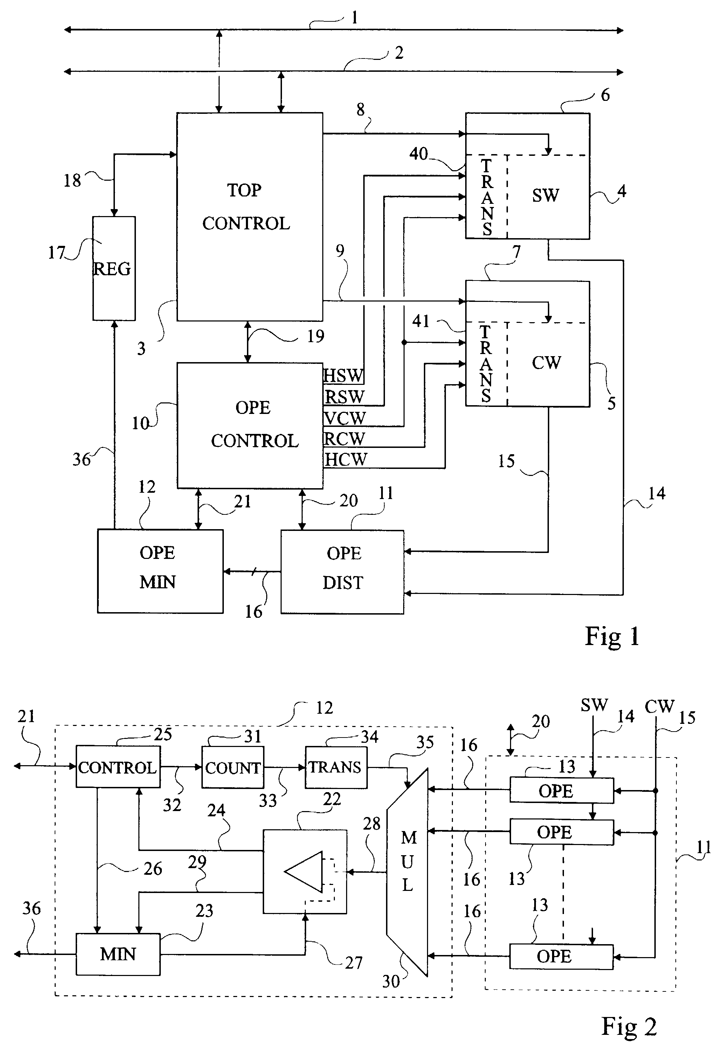

La figure 1 représente un mode de réalisation d'un circuit d'estimation de mouvement selon la présente invention. Ce circuit est destiné à équiper un circuit de compression d'images mobiles. Il communique par l'intermédiaire d'un bus 1 avec un processeur de contrôle du circuit de compression d'images mobiles et, par l'intermédiaire d'un bus 2, avec un processeur de contrôle d'accès à une mémoire (non représentée) contenant toutes les données images à traiter.

L'estimateur de mouvement comporte une première machine d'état finie 3 (TOP CONTROL) gérant les diverses opérations effectuées par l'estimateur et l'écriture des données images dans deux mémoires caches 4, 5. Une première mémoire cache 4 (SW) est destinée à contenir une fenêtre de référence entourant un macrobloc courant stocké dans une deuxième mémoire cache 5 (CW). Chaque mémoire 4, 5 est associée à un contrôleur 6, 7 chargé d'organiser l'écriture des données images dans la mémoire correspondante. Chaque contrôleur mémoire 6, 7 reçoit, de la machine d'état 3, des signaux de commande, d'adresses et de données, véhiculés par des liaisons 8, 9. Pour l'organisation de l'adressage des mémoires 4 et 5, on pourra se référer, par exemple, à la demande de brevet français n°94/05339 dont le contenu est incorporé par références.

L'estimateur de mouvement comporte également une deuxième machine d'état 10 (OPE CONTROL) gérant les opérations de lecture de données dans les mémoires caches 4, 5 ainsi que les opérations de calcul effectuées par deux modules 11 et 12.

Un premier module 11 (OPE DIST) comprend une série d'opérateurs 13 (figure 2) organisés en architecture systolique. La série d'opérateurs 13 (OPE) est destinée, de façon classique, à calculer la distorsion entre le macrobloc courant et un macrobloc extrait de la fenêtre de référence avec un certain vecteur de déplacement. Le nombre d'opérateurs correspond au nombre (par exemple, seize) d'opérations à effectuer en parallèle pour une même position, par exemple horizontale, dans la fenêtre de référence. Les opérateurs 13 du module 11 sont alimentés en pixels par des sorties de données 14, 15 des mémoires caches 4, 5. Un exemple d'alimentation en pixels d'une série d'opérateurs organisés en architecture systolique est décrit dans la demande de brevet n°94/05338 dont le contenu est incorporé par références.

Un deuxième module 12 (OPE MIN) constitue un opérateur de recherche de la distorsion minimale. Seize entrées 16 du module 12 reçoivent, chacune, un résultat de distorsion calculé par accumulation dans un opérateur 13. Ces valeurs sont comparées à une valeur minimale précédemment trouvée pour une autre position horizontale. Quand toute la fenêtre de référence a été explorée, la distorsion minimale et le vecteur de déplacement qui lui est associé sont stockés dans un module de registres 17 (REG).

Le module de registres 17 sert à mémoriser des paramètres d'opération fournis par le processeur de contrôle du circuit de compression d'images ainsi que les résultats des opérations exécutées dans l'estimateur de mouvement. Des liaisons bidirectionnelles 18, 19, 20, 21 sont prévus entre le module 17 et la machine d'état 3, la machine d'état 3 et la machine d'état 10, la machine d'état 10 et les modules 11 et 12. Ces liaisons sont destinées à synchroniser le fonctionnement des différents constituants de l'estimateur et à transférer des signaux de commande ainsi que des paramètres de fonctionnement. En effet, l'estimateur est un estimateur hiérarchique susceptible d'effectuer, pour une même image de base, plusieurs phases d'estimations de mouvement requérant de modifier des paramètres de fonctionnement des opérateurs. Par exemple, une première phase est effectuée sur la base d'une image décimée, c'est-à-dire à deux pixels près, tandis qu'une deuxième phase est effectuée sur la base de vecteurs au demi-pixel près par un mécanisme d'interpolation. Le recours à un processus hiérarchique (ou télescopique) d'estimation de mouvement est parfaitement connu de la technique. Par souci de clarté, on parlera de macrobloc, qu'il s'agisse de portions d'une image de base, décimée, ou obtenue par interpolation. On notera simplement que les données présentes dans les mémoires 4 et 5 doivent être cohérentes les unes avec les autres.

Le module 12 est destiné à déterminer, de façon cyclique, à partir des résultats de distorsion du macrobloc courant pour un vecteur vertical donné (c'est-à-dire pour une position horizontale donnée et pour toutes les positions verticales dans la fenêtre de recherche), la position verticale qui présente une distorsion minimale. Par exemple, le module 12 comporte un comparateur 22 chargé d'examiner séquentiellement les résultats de distorsion issus du module 11 par rapport à une valeur minimale stockée dans un registre 23 (MIN). Cette valeur minimale correspond à la distorsion minimale trouvée lors de l'examen des positions horizontales précédentes. La sortie 24 du comparateur 22 est envoyée à un bloc de commande 25 (CONTROL) du module 12 chargé, en particulier, de commander le registre 23 par une liaison 26. Le comparateur 22 reçoit, sur une première entrée 27, la valeur minimale de distorsion stockée dans le registre 23 et, sur une deuxième entrée 28, la valeur courante à comparer. Quand la distorsion présente sur l'entrée 28 est inférieure à la distorsion minimale précédemment enregistrée, elle devient la nouvelle distorsion minimale véhiculée par une liaison 29 vers le registre 23. La valeur courante présente sur l'entrée 28 est, par exemple, délivrée par un multiplexeur 30 (MUL) recevant, sur ses entrées 16, les différentes valeurs de distorsion calculées par le module 11. Ce multiplexeur 30 est commandé à partir d'un compteur 31 (COUNT) dont une entrée de commande 32 est reliée au bloc 25.

Selon la présente invention, une sortie 33 du compteur 31 est envoyée sur un module 34 de transcodage (TRANS). La sortie 35 du module 34 est reliée à l'entrée de sélection du multiplexeur 30. Le rôle du module 34 de transcodage est, comme on le verra par la suite, de modifier l'ordre séquentiel de sélection des entrées du multiplexeur 30 pour commencer la comparaison à partir de la valeur correspondant à un déplacement vertical minimal du macrobloc pour la position horizontale en cours d'examen.

Quand toute la fenêtre de référence a été explorée, la valeur de distorsion minimale contenue dans le registre 23 est envoyée sur une entrée 36 des registres 17.

La lecture des mémoires caches 4 et 5 est organisée par la machine d'état 10. Pour ce faire, chaque mémoire cache 4, 5 est associée à un module de transcodage 40, 41 (TRANS) chargé d'adresser la mémoire correspondante en lecture en fonction de signaux d'états et de commande que ce module de transcodage reçoit de la machine d'état 10. La machine d'état 10 délivre un signal RSW, RCW de commande en lecture de la mémoire cache 4, 5. L'adressage en lecture de la mémoire 5 s'effectue à partir de signaux d'états VCW et HCW représentant les rangs de calcul, respectivement vertical et horizontal, dans le macrobloc courant. La mémoire 4 est adressée en lecture à partir d'un signal d'état HSW indicateur du rang horizontal dans la fenêtre de référence et à partir du signal VCW. En effet, la position verticale dans la fenêtre de référence se déduit de la position verticale VCW dans le macrobloc courant grâce à l'architecture systolique des opérateurs 13 du module 11.

Selon la présente invention, le module de transcodage 40 est conformé pour transformer une incrémentation séquentielle du signal d'état HSW en un adressage horizontal de la mémoire cache qui commence par un déplacement horizontal minimal du macrobloc courant.

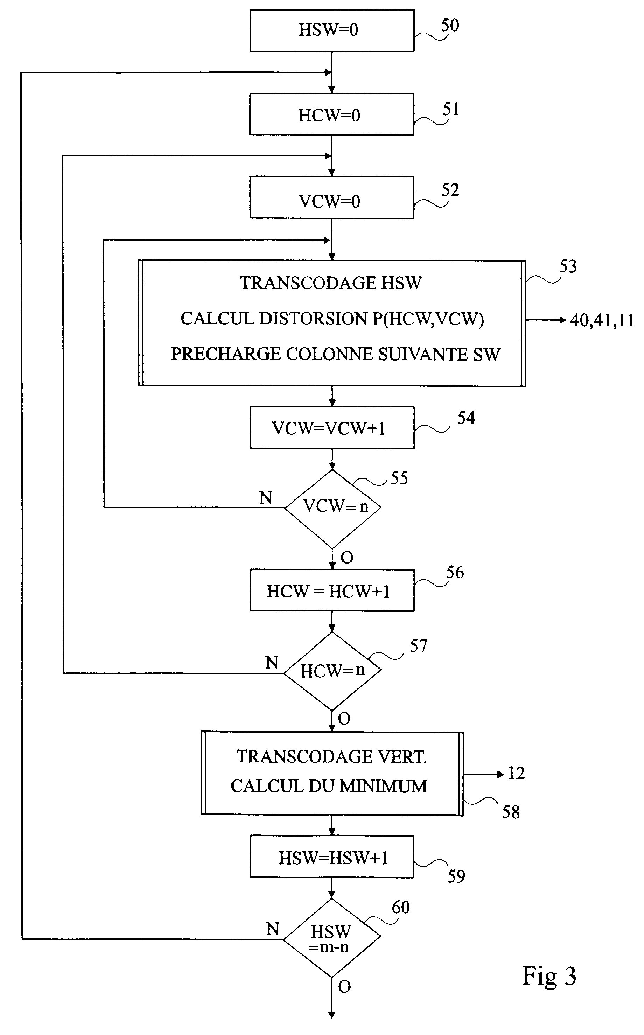

La figure 3 illustre, sous forme d'organigramme, le fonctionnement de la machine d'état 10 organisant l'adressage en lecture des mémoires caches 4 et 5 et gérant le fonctionnement des modules 11 et 12. L'organigramme de la figure 3 illustre le traitement d'un macrobloc courant et de son environnement (fenêtre de référence). Ce fonctionnement est reproduit pour chaque macrobloc d'une image. Dans l'organigramme de la figure 3 on suppose qu'un macrobloc comporte n lignes et n colonnes et que la fenêtre de référence comporte m lignes.

On commence par initialiser (blocs 50, 51 et 52) des compteurs (non représentés) de la machine d'état 10 qui sont respectivement associés aux signaux d'états HSW, HCW et VCW. Ces signaux d'états sont envoyés, avec des signaux de commande en lecture RSW et RCW, aux transcodeurs 40 et 41. Ces transcodeurs déterminent les adresses de lecture respectives d'un pixel dans la fenêtre de référence et dans le macrobloc courant. Ces pixels sont envoyés au module 11 qui réalise alors seize (m-n) opérations en parallèle à partir du pixel concerné de la fenêtre courante. Pendant cette accumulation de distorsion, on effectue également un préchargement d'un pixel de la fenêtre de référence correspondant à la colonne suivante comme cela est décrit dans la demande de brevet français n°94/05338.

On incrémente ensuite (bloc 54) le compteur associé à la position verticale dans le macrobloc courant et on réitère les opérations du bloc 53 tant que la dernière ligne de la première colonne du macrobloc courant n'a pas été atteinte. A la fin de cette première colonne du macrobloc courant, on incrémente le compteur associé à la position horizontale (HCW) dans le macrobloc courant (bloc 56) et on réitère les opérations des blocs 52 à 56 tant que la dernière colonne du macrobloc courant n'a pas été atteinte (bloc 57).

A la fin du macrobloc courant, on dispose, dans les opérateurs 13 du module 11, de seize (m-n) valeurs de distorsion de ce macrobloc par rapport à seize positions verticales de ce macrobloc dans la fenêtre de référence. On effectue alors (bloc 58), au moyen du module 12, une détermination de la distorsion minimale parmi ces seize valeurs en appliquant un transcodage vertical à la lecture de ces valeurs pour commencer par celle qui correspond au déplacement vertical minimal. Quand une valeur courante est inférieure à la valeur contenue dans le registre 23, cette valeur est stockée dans le registre 23 et les coordonnées verticale et horizontale du vecteur de déplacement correspondant sont également mémorisées dans le module 12.

On incrémente ensuite (bloc 59) le compteur associé à la position horizontale (HSW) dans la fenêtre de référence et on réitère les opérations des blocs 51 à 59 tant que la fenêtre de référence n'a pas été complètement exploitée (bloc 60), c'est-à-dire, pendant seize cycles.

A la fin de l'exploitation de la fenêtre de référence, on dispose dans le registre 23, d'une valeur de distorsion minimale associée à un vecteur de déplacement minimum.

La réalisation pratique de l'estimateur de mouvement selon la présente invention est à la portée de l'homme du métier à partir des indications fonctionnelles données ci-dessus. En particulier, la réalisation des transcodeurs 40 et 34 destinés à sélectionner les positions, respectivement horizontale et verticale, de la fenêtre de référence dans un ordre tel que l'estimateur commence par analyser les vecteurs de mouvement les plus courts peut correspondre à une combinaison logique et/ou à un calcul sur les bits délivrés par les compteurs correspondants.

Par exemple, le compte 0 est associé, pour la mémoire 4, à la composante horizontale d'adresse m/2 et, pour le multiplexeur 30, à l'entrée 16 de rang n/2. Les valeurs d'adressage et de sélection suivantes correspondent, pour les comptes impairs, à l'adresse (ou rang) précédente diminuée du résultat du compteur et, pour les comptes pairs, à l'adresse (ou rang) précédente majorée du résultat du compteur. On obtient ainsi, par rapport au vecteur de déplacement nul du macrobloc courant dans la fenêtre de référence, des décalages horizontaux et verticaux ayant, pour incrément, successivement 0, -1, +1, -2, +2, -3, +3, etc.

On peut également prévoir une exploitation de la fenêtre de référence, par rapport au vecteur de déplacement nul du macrobloc courant, basée sur des incréments successifs 0, +1, -1, +2, -2, +3, -3, etc. dans les deux directions. Selon le mode d'obtention de ces incréments décrit ci-dessus, on majore l'adresse précédente par les résultats impairs du compteur et on minore l'adresse précédente par les résultats pairs.

Un avantage de la présente invention est qu'elle permet de réduire la longueur des séquences de bits à transmettre pour chaque macrobloc. Non seulement la séquence issue d'un codage à longueur variable de la distorsion minimale est minimisée, mais la séquence correspondant au codage à longueur variable du vecteur de mouvement est également minimisée, ce dernier étant le plus proche possible du vecteur nul.

Un autre avantage de la présente invention est que, si elle est associée à la mise en oeuvre d'un procédé d'interruption de la recherche des vecteurs de mouvement dès qu'une valeur de distorsion inférieure à un seuil prédéterminé est atteinte, on réduit la puissance de calcul nécessaire et le temps de recherche des vecteurs de mouvement pour chaque macrobloc. En effet, de façon statistique, les vecteurs de mouvement les plus probables sont les vecteurs proches du déplacement nul. Ainsi, en effectuant l'examen de la fenêtre de recherche à partir du vecteur de déplacement nul et selon un mécanisme "pseudo-spiral" tel que décrit ci-dessus, on atteint plus rapidement le seuil fixé conditionnant l'arrêt de la recherche.

Un tel procédé d'interruption de la recherche par rapport à un seuil prédéterminé peut être mis en oeuvre, par exemple, au sein du module 12. Si le minimum calculé à l'étape 58 (figure 3) est inférieur au seuil prédéterminé, on peut alors arrêter la recherche de vecteur de déplacement pour le macrobloc courant sans qu'il soit nécessaire de continuer l'examen de la fenêtre de référence avec les positions horizontales suivantes. On évite ainsi de poursuivre la recherche vers un autre minimum qui correspondrait à une précision de distorsion inutile par rapport aux normes de compression d'images.

On peut également associer le module 11 de calcul de distorsion à un moyen de comparaison des distorsions obtenues à l'issue de chaque étape de calcul (53, figure 3) par rapport à la distorsion minimale contenue dans le registre 23 du module 12. En effet, si les distorsions accumulées par chaque opérateur 13 du module 11 sont, à la fin d'une étape 53, toutes supérieures à la distorsion minimale du registre 23, il n'est pas nécessaire de poursuivre le calcul de distorsion pour la position horizontale courante de la fenêtre de référence. On peut alors interrompre le calcul et passer directement à l'étape 59 en évitant des calculs qui conduiront, de toute façon, à une valeur supérieure en raison de l'accumulation réalisée par les opérateurs 13.

On notera que tous les constituants de l'estimateur de mouvement sont câblés, c'est-à-dire font l'objet d'une réalisation "matérielle" par opposition à une réalisation "logicielle", y compris les machines d'état, les modules d'opérateurs et les transcodeurs.

Bien entendu, la présente invention est susceptible de diverses variantes et modifications qui apparaîtront à l'homme de l'art. En particulier, l'invention s'applique quelle que soit la taille des macroblocs et des fenêtres de référence et quel que soit le nombre de macroblocs par image. De plus, l'invention s'applique quelle que soit la direction (verticale ou horizontale) de la fenêtre de référence traitée en parallèle par les opérateurs 13. En outre, bien que l'invention ait été décrite ci-dessus en relation avec un système de compression d'images mobiles, l'invention s'applique, plus généralement, à tout calcul en parallèle dans un tableau en deux dimensions pour lequel les résultats recherchés sont statistiquement près d'un point déterminé du tableau.

## Revendications

1. Procédé d'estimation de mouvement, consistant à déterminer un vecteur de mouvement (V[x, y]), d'un macrobloc (CW) d'une image courante par rapport à une fenêtre de référence (SW) contenant le macrobloc et son environnement dans l'image précédente, comme étant le vecteur pour lequel le macrobloc courant présente une distorsion minimale par rapport à un macrobloc de la fenêtre de référence, caractérisé en ce qu'il consiste à examiner la distorsion du macrobloc courant (CW) par rapport aux macroblocs dans la fenêtre de référence (SW) avec une amplitude croissante de vecteurs de mouvement depuis un vecteur nul.

2. Procédé selon la revendication 1, caractérisé en ce qu'il consiste à adresser en lecture une première mémoire cache (4), contenant la fenêtre de référence (SW), dans un ordre d'amplitudes croissantes du déplacement du macrobloc courant (CW) dans une première direction (x).

3. Procédé selon la revendication 2, caractérisé en ce qu'il consiste à exploiter, dans un ordre d'amplitudes croissantes du déplacement du macrobloc courant (CW) dans une deuxième direction (y), les distorsions calculées pour une position du macrobloc courant (CW) dans la première direction (x).

4. Procédé selon l'une quelconque des revendications 1 à 3, caractérisé en ce que chaque distorsion calculée est comparée à une valeur minimale des distorsions calculées précédemment pour le macrobloc courant (CW).

5. Dispositif d'estimation de mouvement d'un macrobloc (CW) d'une image courante dans une fenêtre de référence (SW) contenant le macrobloc courant et son environnement dans une image précédente, comportant :

   une première mémoire cache (4) destinée à contenir la fenêtre de référence ;
   une deuxième mémoire cache (5) destinée à contenir le macrobloc courant ; et
   un module (11) d'opérateurs (13), organisés en architecture systolique et alimentés par une lecture des mémoires caches, destiné à calculer, pour chaque position du macrobloc courant dans une première direction (x) de la fenêtre de référence, la distorsion entre le macrobloc courant et plusieurs macroblocs de la fenêtre de référence dans une deuxième direction (y) de la fenêtre de référence,

   caractérisé en ce qu'il comporte :

   un moyen (40) de transcodage de l'adresse de lecture de la première mémoire cache (4) pour adresser cette dernière dans un ordre d'amplitudes croissantes des déplacements du macrobloc courant dans la première direction (x) ; et
   un moyen (12) de sélection, dans un ordre d'amplitudes croissantes des déplacements du macrobloc courant dans une deuxième direction (y), d'un vecteur de mouvement associé à une distorsion minimale à partir des valeurs délivrées par le module d'opérateurs.

Fig 1

Fig 2

HSW=0 — 50

HCW=0 — 51

VCW=0 — 52

TRANSCODAGE HSW

CALCUL DISTORSION P(HCW,VCW)

PRECHARGE COLONNE SUIVANTE SW

— 53 → 40,41,11

VCW=VCW+1 — 54

VCW=n — 55

N

O

HCW = HCW+1 — 56

HCW=n — 57

N

O

TRANSCODAGE VERT.

CALCUL DU MINIMUM

→ 12

— 58

HSW=HSW+1 — 59

HSW =m-n — 60

N

O

Fig 3

**Office européen des brevets**

# RAPPORT DE RECHERCHE EUROPEENNE

Numéro de la demande

EP 97 41 0141

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | EP 0 717 372 A (THOMSON MULTIMEDIA) <br> * abrégé; figure 9A * <br> * page 3, ligne 2 - ligne 3 * | 1-4 | G06T7/20 |
| Y | | 5 | |
| | --- | | |
| Y,D | EP 0 680 220 A (SGS-THOMSON MICROELECTRONICS) <br> * le document en entier * | 5 | |
| | ----- | | |

**DOMAINES TECHNIQUES RECHERCHES (Int.Cl.6)**

G06T

Le présent rapport a été établi pour toutes les revendications

| Lieu de la recherche | Date d'achèvement de la recherche | Examinateur |
|---|---|---|
| LA HAYE | 10 mars 1998 | Chateau, J-P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)